# EUROPEAN PATENT APPLICATION

(11) **EP 3 904 582 A1**
(43) Date of publication of application: **03.11.2021**
(21) Application number: 21166198.8
(22) Date of filing: 31.03.2021
(51) Int. Cl.: D06F 37/22, F16F 7/02, F16F 1/38, F16F 1/387

(54) **RADIAL SHOCK ABSORBER, HOUSEHOLD APPLIANCE COMPRISING THE RADIAL SHOCK ABSORBER AND PROCESS FOR OPERATING THE HOUSEHOLD APPLIANCE**

(30) Priority: 30.04.2020 EP 20382355; 03.11.2020 ES 202032369 U
(71) Applicant: BSH Hausgeräte GmbH, 81739 München (DE)
(72) Inventor: Alvarez Lanuza, Sandra, 50013 Zaragoza (ES); Escartin Barduzal, Andres, 50009 Zaragoza (ES); Gracia Bobed, Ismael, 50194 Zaragoza (ES); Graus Almenar, Javier, 50002 Zaragoza (ES); Planas Layunta, Fernando, 50009 Zaragoza (ES)

(57) **Abstract**

The invention relates to a radial shock absorber 8,9 for a household appliance 1, comprising a first joint rod 17, which comprises a first end 19 and a second end 20 opposite to the first end 19, and a second joint rod 18, which comprises a first end 21 and a second end 22 opposite to the first end 21; the joint rods 17,18 being movable relative to each other about a second rotation axis 15 of the second articulation 11 (M2); wherein the first end 21 of the second rod 18 is connected with the first end 19 of the first joint rod 17 by means of a second articulation 11 (M2); wherein the second end 20 of the first joint rod 17 is connectable to a housing 2 of the household appliance 1 by means of a first articulation 10 (M1) defined by a first rotation axis 14 and the second end 22 of the second joint rod 18 is connectable to a tub 3 of the household appliance 1 by means of a third articulation 12 (M3) defined by a third rotation axis 16; and wherein at least one of the first 10, second 11 and third articulation 12 comprises a shape-memory material 26. The invention relates moreover to a household appliance 1 comprising this radial shock absorber 8,9 and to a process for operating the household appliance 1.

## Description

The invention relates to a radial shock absorber, a household appliance comprising the radial shock absorber and a process for operating the household appliance. In particular, the invention relates to a radial shock absorber for a household appliance, comprising a first joint rod, which comprises a first end and a second end opposite to the first end, and a second joint rod, which comprises a first end and a second end opposite to the first end; the joint rods being movable relative to each other about a second rotation axis of a second articulation (M2); wherein the first end of the second rod is connected with the first end of the first joint rod by means of the second articulation; and wherein the second end of the first joint rod is connectable to a housing of the household appliance by means of a first articulation (M1) defined by a first rotation axis and the second end of the second joint rod is connectable to a tub of the household appliance by means of a third articulation (M3) defined by a third rotation axis, a household appliance comprising this radial shock absorber and a process for operating this household appliance.

Household appliances for the treatment of clothes contain in general a rotating drum that rotates during its use at different speeds, for example in washing machines and clothes dryers. The variation in rotation speed is especially pronounced in washing machines. A washing machine comprises in general a tub in which a laundry drum is mounted to be capable of rotating about a horizontal axis. Tub and laundry drum oscillate during the operation of the washing machine. Thus, the tub is usually fixed by means of a suitable shock absorbing system to the housing of the washing machine. The shock absorbers that are usually connected with the housing bottom can be for example linear dampers such as oil dampers. In the dampers, two components of the shock absorber are coaxially aligned in their respective longitudinal axes and can move toward each other along these longitudinal axes.

As a further type of shock absorbers, radial shock absorbers are known. These commonly have two joint rods which are connected to each other by a suitable articulation. They are thus also termed articulation shock absorbers.

For example, the publication WO 2018/109602 A discloses an articulation shock absorber of a household appliance comprising a first joint rod, which comprises a first end and a second end opposite to the first end, and a second joint rod, which comprises a first end and a second end opposite to the first end, wherein the first end of the second joint rod is connected with the first end of the first joint rod by means of a first articulation, and wherein the joint rods are capable of being moved relative to each other about a first rotation axis of the first articulation. The second end of the first joint rod is connectable to a housing of the household appliance by means of a second articulation defined by a second rotation axis and the second end of the second joint rod is connectable to a tub of the household appliance by means of a third articulation defined by a third rotation axis; and the joint rods are arranged in such a way that a complete rotation about the first rotation axis is prevented.

However, the vibrations will differ during the operation of a household appliance. Especially in a washing machine or as wash-dryer, the vibrations will be different in different washing programs. For example the spinning rates may be different to accommodate different types of laundry. Moreover, the rotation rates during the actual washing steps are significantly lower.

It would thus be desirable to provide household appliances in which an adaptation to varying vibration conditions is possible.

Against this background it is an object of the present invention to provide a shock absorber and a household appliance comprising the shock absorber, wherein an adaptation to different vibration conditions can be effected.

In accordance with the present invention, this object is achieved by a radial shock absorber, a household appliance and a method for operating a household appliance with the features of the independent claims. Preferred embodiments of the invention are detailed in the respective dependent claims. Preferred embodiments of the radial shock absorber correspond to preferred embodiments of the household appliance and of the method, respectively, even if they are not referred to herein in detail.

The invention is thus directed to a radial shock absorber for a household appliance, comprising a first joint rod, which comprises a first end and a second end opposite to the first end, and a second joint rod, which comprises a first end and a second end opposite to the first end; the joint rods being movable relative to each other about a second rotation axis of a second articulation (M2); wherein the first end of the second rod is connected with the first end of the first joint rod by means of the second articulation (M2); wherein the second end of the first joint rod is connectable to a housing of the household appliance by means of a first articulation (M1) defined by a first rotation axis and the second end of the second joint rod is connectable to a tub of the household appliance by means of a third articulation (M3) defined by a third rotation axis; and wherein at least one of the first, second and third articulation comprises a shape-memory material.

Shape-memory materials are featured by the ability to recover their original shape from a significant and seemingly plastic deformation when a particular stimulus is applied. This is known as the shape-memory effect. Various shape-memory materials are known, in particular shape-memory alloys and shape-memory polymers.

A shape-memory alloy is an alloy that can be deformed when cold but returns to its pre-deformed shape when heated. It is also called memory metal, memory alloy, smart metal, smart alloy, or muscle wire.

In a preferred embodiment of the present invention, the shape-memory material in the radial shock absorber is however a shape-memory polymer.

Shape-memory polymers differ from shape-memory alloys by their glass transition or melting transition from a hard to a soft phase which is responsible for the shape-memory effect. In shape-memory alloys, martensitic/austenitic transitions are responsible for the shape-memory effect. There are a number of advantages that make shape-memory polymers more attractive than shape-memory alloys. They have a high capacity for elastic deformation (up to 200% in most cases), much lower cost, lower density, a broad range of application temperatures which can be tailored to specific needs, easy processing, potential biocompatibility and biodegradability, and may exhibit superior mechanical properties than shape-memory alloys.

Shape-memory polymers are polymeric smart materials that have the ability to return from a deformed state (temporary shape) to their original (permanent) shape induced by an external stimulus (trigger), such as a temperature change or an electric current. Shape-memory polymers can retain two or sometimes three shapes, and the transition between those is induced often by temperature. In addition to a temperature change, the shape change of shape-memory polymers can also be triggered by an electric or magnetic field, by light or a solution. The shape-memory polymers cover a wide property-range from stable to biodegradable, from soft to hard, and from elastic to rigid, depending on the structural units that constitute the shape-memory polymer. Shape-memory polymers include thermoplastic and thermoset (covalently cross-linked) polymeric materials.

Shape-memory polymers have both a visible, current (temporary) form and a stored (permanent) form. Once the latter has been manufactured by conventional methods, the material is changed into another, temporary form by processing through heating, deformation, and finally, cooling. The polymer maintains this temporary shape until the shape change into the permanent form is activated by a predetermined external stimulus. This effect is based on their molecular network structure, which contains at least two separate phases. The phase showing the highest thermal transition, Tₚₑᵣₘ, is the temperature that must be exceeded to establish the physical crosslinks responsible for the permanent shape. The switching segments, on the other hand, are the segments with the ability to soften past a certain transition temperature Tₜᵣₐₙₛ and are responsible for the temporary shape. In some cases this is the glass transition temperature T_{g} and in others the melting temperature Tₘ. Exceeding the glass temperature Ttrans while remaining below Tₚₑᵣₘ activates the switching by softening these switching segments and thereby allowing the material to resume its original (permanent) form. Below Tₜᵣₐₙₛ, flexibility of the segments is at least partly limited. If Tₘ is chosen for programming the shape-memory polymer, strain-induced crystallization of the switching segment can be initiated when it is stretched above Tₘ and subsequently cooled below Tₘ. These crystallites form covalent netpoints which prevent the polymer from reforming its usual coiled structure. The hard to soft segment ratio is in general in a range of from 5/95 to 95/5, more preferably in a range of from 20/80 to 80/20.

In the transition from the glassy state to a rubber-elastic state by for example thermal activation, the rotations around segment bonds become increasingly unimpeded. This allows chains to assume other possibly, energetically equivalent conformations with a small amount of disentangling. The majority of shape-memory polymers thus forms compact, random coils because this conformation is entropically favored over a stretched conformation.

Polymers in this elastic state with "Number average molecular weight" greater than 20,000 stretch in the direction of an applied external force. If the force is applied for a short time, the entanglement of polymer chains with their neighbors will prevent large movement of the chain and the sample recovers its original conformation upon removal of the force. If the force is applied for a longer period of time, however, a plastic, irreversible deformation occurs due to the slipping and disentangling of the polymer chains.

In a preferred embodiment of the present invention, cross-linked shape-memory polymers are thus used. The cross-linking in these polymers prevents the slipping and flow of polymer chains. According to the present invention, both chemically and physically crosslinked shape-memory polymers can be used advantageously.

Examples of suitable physically crosslinked shape-memory polymers are polyurethanes, block copolymers of polyethylene terephthalate (PET) and polyethylene oxide (PEO), block copolymers containing polystyrene and poly(1,4-butadiene), an ABA triblock copolymer made from poly(2-methyl-2-oxazoline) and polytetrahydrofuran, or linear, amorphous polynorbornene. Physical cross-linking is in general effected through hydrogen bonding.

Accordingly, in a preferred embodiment of the radial shock absorber of the present invention, the shape-memory polymer is a physically crosslinked shape-memory polymer. The physically crosslinked shape-memory polymer is preferably selected from among the polymers polyurethane, polyethylene terephthalate (PET), polyethylene oxide (PEO), polynorbornene, and block copolymers containing polystyrene and poly(1,4-butadiene).

In a more preferred alternative embodiment of the present invention, chemically crosslinked shape-memory polymers are being used. Namely, the main limitation of physically crosslinked polymers is irreversible deformation during memory programming due to the creep.

In a preferred embodiment of the radial shock absorber, the chemically crosslinked shape-memory polymer is selected from among the polymers polyurethane and PEO-PET block copolymers.

Chemical crosslinking can be achieved in the course of the synthesis by effecting the polymerization of suitable monomers in the presence of multifunctional crosslinkers (3 or more functional units). Alternatively, a subsequent chemically crosslinking of a linear or branched polymer can be achieved. Depending on the polymer, various options are available, for example crosslinking via UV light. As an example, chemically crosslinked polyurethane can be produced by using excess diisocyanate or by using a crosslinker such as glycerin or trimethylol propane. Introduction of covalent crosslinking improves in creep, increase in recovery temperature and recovery window. As another example, PEO-PET block copolymers can be crosslinked by using maleic anhydride, glycerin or dimethyl 5-isophthalate as crosslinking agent.

In a preferred embodiment of the present invention, an electric current is used to activate the shape-memory effect of shape-memory polymers. This is in particular possible when shape-memory polymers are used in combination with an electrically conductive filler, for example carbon nanotubes, short carbon fibers (SCFs), carbon black, or metallic Ni powder. These conducting shape-memory polymers are in general produced by chemically surface-modifying multi-walled carbon nanotubes (MWNTs) in a mixed solvent of nitric acid and sulfuric acid, with the purpose of improving the interfacial bonding between the polymers and the conductive fillers. The shape-memory effect in these types of shape-memory polymers depends on the filler content and the degree of surface modification of the MWNTs, with the surface modified versions exhibiting good energy conversion efficiency and improved mechanical properties.

In the present invention, the change in the shape of the shape-memory polymer is preferably effected by means of a temperature change or an electrical current. In a preferred embodiment of the radial shock absorber, the shape-memory polymer contains thus a thermally and/or electrically conductive filler. Said fillers included metal nanoparticles, metal nanowires, carbon fibers, nanoparticles of metal oxides, silica nanoparticles, alumina nanoparticles, carbon nanotubes, carbon nanofibers, graphite, carbon black and boron/aluminum compounds.

The change in temperature can be effected by placing a heating device close to the radial shock absorber, in particular close to the articulation or articulations that contain(s) the shape-memory material. This heating device can be for example a blower that provides warm or hot air that can impinge suitably on the shock absorber. The heating device is preferably connected to a control device of a household device, such that the heating and thus the shape of the shape-memory material and its effect on the friction in the radial shock absorber can be adjusted by the control device to a specific vibration condition.

In the case that heat is applied, the memory shape polymer will be heated in general to a temperature of from 50 to 80 °C, preferably to a temperature of from 60 to 70 °C.

Similarly, a source of an electric current can be placed at the respective articulation. The electric current source is then preferably also connected to a control device of a household device. The electric current which is conducted through the shape-memory material, in particular the shape-memory polymer, and thus the shape of the shape-memory material and its effect on the friction in the radial shock absorber can thus be adjusted by the control device to a specific vibration condition.

Upon the application of an electrical current or heat, the shape-memory material, in particular the shape-memory polymer, will deform and therefore apply force to some areas of the rotation axis of the respective articulation wherein it is used. In a preferred embodiment of the invention, a friction material is used that is placed in the respective articulation between its rotation axis and for example the shape-memory polymer. In this case, the force will be applied to some areas of the friction material, for example an organic polymer foam. In any way, more resistance to the movement of the joint rod, which is usually a metallic arm, will be exerted and therefore the friction of the system will be adjusted.

A radial shock absorber is thus preferred wherein the at least one of the first, second and third articulation comprises a friction material which is arranged between the first, second and/or third rotation axis, and the shape-memory material. The friction material is preferably a polymeric organic foam or rubber material.

In a particularly preferred embodiment of the radial shock absorber, the first articulation (M1) comprises a shape-memory material, in particular a shape-memory polymer.

The radial shock absorber contains preferably a rotary movement limitation device, as is for example described in the publication WO 2018/109602 A.

The invention is moreover directed to a household appliance comprising the radial shock absorber as defined above.

In a preferred embodiment, the household appliance is a washing machine or a washer-dryer. A washing machine and a washer-dryer comprise in general a tub and a laundry drum which is rotatable around a horizontal axis and which is arranged within the tub. In accordance with the present invention, at least one radial shock absorber, preferably two, is in general placed between the tub and a housing of the washing-machine or a wash-dryer. To this end the radial shock absorber is usually connected via a suitable joint rod receptacle in the bottom of the housing.

In addition, the present invention is directed to a process for operating a household appliance comprising the radial shock absorber as defined above, wherein a friction between a first, second and/or third rotation axis in the respective first (M1), second (M2) and/or third articulation (M3), is adjusted in dependence of a vibration condition of the household appliance by means of a change of shape in a shape-memory material.

In a preferred embodiment of this process, the household appliance is a washing-machine or a wash-dryer with a tub and a laundry drum which is rotatable around a horizontal axis and arranged within the tub, and wherein at least one, preferably two, radial shock absorber is placed between the tub and a housing of the washing-machine or a wash-dryer.

The present invention has numerous advantages. First of all, the operation of the shock absorber is adaptable to different vibration conditions that can occur for example in a household appliance. Vibration conditions may differ especially in washing machines where they are often different in different washing programs. This adaptation is essentially achieved in that the friction in a used shock absorber can be varied such that the respective mechanical movements can be transformed to varying extents into friction and therefore into heat that may be conducted and dispersed elsewhere.

Moreover, the shock absorber of the present invention can reduce, in the case where the household appliance is a washing machine or a washer dryer, the effort of the tube when spinning is effected, and can reduce noises, vibrations and oscillations. The present invention allows moreover cheaper shock absorbers.

The shock absorber of the present invention which provides in essence and in preferred embodiments a smart actuator based on shape-memory polymers will improve the current shock absorbers used in the industry in that, for example, a better use in the free space is possible around the tub of a washing machine or a dryer. The radial shock absorbers can be smaller in comparison with regular ones and allow to design bigger tubs and to place them in places which have been forbidden for regular shock absorbers.

In the following the invention will be described in more detail by reference to Figs.1 to 5.
Fig. 1 is a schematic representation of relevant parts of a non-limiting embodiment of the household appliance according to the invention which is here configured as a washing machine.
Fig. 2 shows an enlarged section of the washing machine of Fig. 1 wherein an embodiment of the radial shock absorber of the present invention is shown in detail.
Fig. 3 shows a radial shock absorber of the present invention with a first (M1), a second (M2) and a third articulation (M3).
Fig. 4 shows an enlarged detail of the radial shock absorber of the present invention, namely the first articulation (M1) with part of the first joint rod in a state where no shape change of the shown shape-memory polymer has been effected.
Fig. 5 shows an enlarged detail of the radial shock absorber of the present invention, namely - in difference to the one shown in Fig. 4 - the first articulation (M1) with part of the first joint rod in a state where a shape change of the shown shape-memory polymer has been effected by the application of heat or electricity.

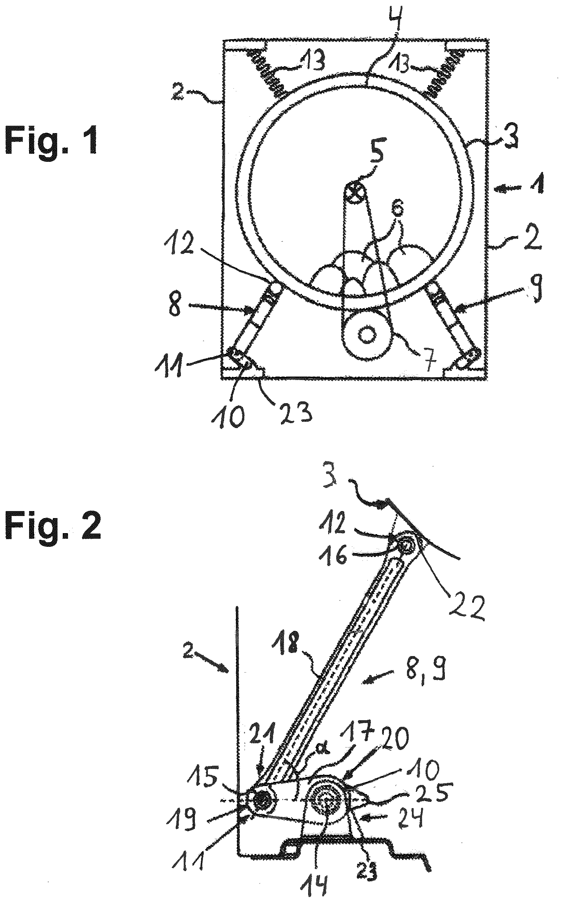

Fig. 1 is a schematic representation of relevant parts of a non-limiting embodiment of the household appliance according to the invention which is here configured as a washing machine 1. The washing machine of Fig. 1 comprises an outer tub 3 in which a laundry drum 4 is mounted rotatably around a horizontal axis 5. The laundry drum 4 is driven by a motor 7. 6 refers to laundry items. Oscillations during the operation of washing machine 1 are damped by the use of two radial shock absorbers 8 and 9 of the present invention. The two radial shock absorbers 8 and 9 are each connected on one end to the bottom 23 of the housing 2. On the other end, the two radial shock absorbers 8 and 9 are each connected to the outer tub 3. Two springs 13 are also used to stabilize the outer tub 3. In Fig. 1 also the three articulations 10, 11 and 12 of the radial shock absorber 8 can be seen.

Fig. 2 shows an enlarged section of the washing machine 1 of Fig. 1 wherein an embodiment of the radial shock absorber 8, 9 of the present invention is shown in detail.

The radial shock absorber 8, 9 for the washing machine 1 comprises a first joint rod 17, which comprises a first end 19 and a second end 20 opposite to the first end 19, and a second joint rod 18, which comprises a first end 21 and a second end 22 opposite to the first end 21. The joint rods 17, 18 are movable relative to each other about a second rotation axis 15 of a second articulation 11 (M2). Moreover, the first end 21 of the second joint rod 18 is connected with the first end 19 of the first joint rod 17 by means of the second articulation 11 (M2). The second end 20 of the first joint rod 17 is connected to a housing 2 of the washing machine 1 via a joint rod receptacle 24, in particular its bottom 23, by means of a first articulation 10 (M1) defined by a first rotation axis 14; and the second end 22 of the second joint rod 18 is here connected to a tub 3 of the washing machine 1 by means of a third articulation 12 (M3) defined by a third rotation axis 16. At least one of the first 10, second 11 and third articulation 12 comprises a shape-memory material which is here however not shown in detail. A rotary movement limitation element 25 is also shown

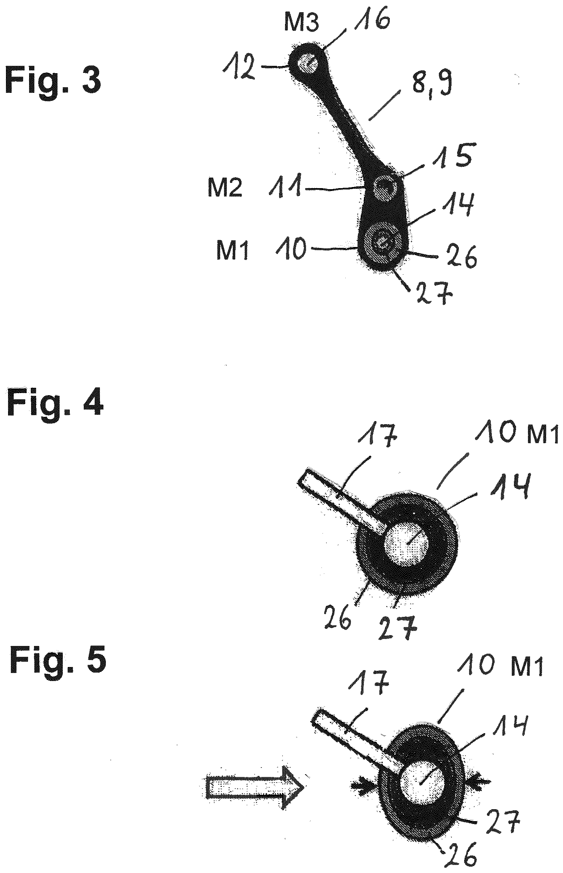

Fig. 3 shows a radial shock absorber 8, 9 of the present invention with a first articulation 14 (M1), a second articulation 15 (M2) and a third articulation 16 (M3). In this non-limiting embodiment of an inventive radial shock absorber, the memory-shape polymer 26 is placed in the first articulation 10 (M1). In particular, the first articulation 10 comprises a friction material 27 which is arranged between the first rotation axis 14 and the shape-memory polymer 26. The shape-memory polymer 26 is here in its original state which is a non-deformed state. No particular force is thus exerted on the friction material 27. I.e., there is no particular effect on the friction of the friction material 27. The term "friction material" is used herein in order to indicate that it is this material which provides some hindrance for the rotation around for example the first rotation axis such that the kinetic energy of the vibrating tub can be transformed into heat.

Fig. 4 shows an enlarged detail of the radial shock absorber 8, 9 of the present invention, namely the first articulation (M1) with part of the first joint rod 17 in a state where no shape change of the shown shape-memory polymer 26 has been effected by means of for example heat or an electric current. Similar to Fig. 3, the first articulation 10 comprises a friction material 27 which is arranged between the first rotation axis 14 and the shape-memory polymer 26. The shape-memory polymer 26 is in its original non-deformed state. No particular force is thus exerted on the friction material 27. I.e., there is no particular effect on the friction of the friction material 27. The term "friction material" is used herein in order to indicate that it is this material which provides some hindrance for the rotation around the first rotation axis such that the kinetic energy of the oscillating tub can be transformed into heat.

Fig. 5 shows an enlarged detail of the radial shock absorber 8,9 of the present invention, namely the first articulation 10 (M1). In difference to the one shown in Fig. 4, the first articulation 10 (M1) with part of the first joint rod 17 is in a state where a shape change of the shown shape-memory polymer 26 has been effected by the application of heat or an electric current. Accordingly, Fig. 5 illustrates how a friction between for example a first rotation axis 14 in the first articulation 10 can be adjusted in dependence of a vibration condition of a household appliance by means of a change of shape in a shape-memory material 26.

### REFERENCE SIGNS

- 1: Household appliance; washing machine
- 2: Housing (of the household appliance)
- 3: Tub
- 4: Laundry drum
- 5: Rotation axis of the drum
- 6: Laundry items
- 7: Drive Motor
- 8: (First) Articulation shock absorber
- 9: (Second) Articulation shock absorber
- 10: First Articulation (M1)
- 11: Second Articulation (M2)
- 12: Third Articulation (M3)
- 13: Springs
- 14: First rotation axis
- 15: Second rotation axis
- 16: Third rotation axis
- 17: First joint rod
- 18: Second joint rod
- 19: First end of first joint rod
- 20: Second end of first joint rod
- 21: First end of second joint rod
- 22: Second end of second joint rod
- 23: Bottom of housing
- 24: Joint rod receptacle
- 25: Rotary movement limitation element
- 26: Shape-memory material; shape-memory polymer
- 27: Friction material

## Claims

1. Radial shock absorber (8,9) for a household appliance (1), comprising a first joint rod (17), which comprises a first end (19) and a second end (20) opposite to the first end (19), and a second joint rod (18), which comprises a first end (21) and a second end (22) opposite to the first end (21); the joint rods (17,18) being movable relative to each other about a second rotation axis (15) of a second articulation (11) (M2); wherein the first end (21) of the second rod (18) is connected with the first end (19) of the first joint rod (17) by means of the second articulation (11)(M2); wherein the second end (20) of the first joint rod (17) is connectable to a housing (2) of the household appliance (1) by means of a first articulation (10) (M1) defined by a first rotation axis (14) and the second end (22) of the second joint rod (18) is connectable to a tub (3) of the household appliance (1) by means of a third articulation (12) (M3) defined by a third rotation axis (16),
**characterized in that** at least one of the first (10), second (11) and third articulation (12) comprises a shape-memory material (26).

2. Radial shock absorber (8,9) according to claim 1, wherein the shape-memory material (26) is a shape-memory polymer.

3. Radial shock absorber (8,9) according to claim 2, wherein the shape-memory polymer (26) is a physically crosslinked shape-memory polymer.

4. Radial shock absorber (8,9) according to claim 3, wherein the physically crosslinked shape-memory polymer (26) is selected from among the polymers polyurethane, polyethylene terephthalate (PET), polyethylene oxide (PEO), polynorbornene, and block copolymers containing polystyrene and poly(1,4-butadiene).

5. Radial shock absorber (8,9) according to claim 2, wherein the shape-memory polymer (26) is a chemically crosslinked shape-memory polymer.

6. Radial shock absorber (8,9) according to claim 5, wherein the chemically crosslinked shape-memory polymer (26) is selected from among the polymers polyurethane and PEO-PET block copolymers.

7. Radial shock absorber (8,9) according to any of claims 2 to 6, wherein the shape-memory polymer (26) contains a thermally and/or electrically conductive filler.

8. Radial shock absorber (8,9) according to any of claims 1 to 7, wherein the first articulation (10) (M1) comprises a shape-memory material (26).

9. Radial shock absorber (8,9) according to any of claims 1 to 8, wherein the at least one of the first (10), second (11) and third articulation (12) comprises a friction material (27) which is arranged between the first (14), second (15) and/or third rotation axis (16), and the shape-memory material (26).

10. Radial shock absorber (8,9) according to claim 9, wherein the friction material (27) is a polymeric organic foam or rubber material.

11. Radial shock absorber (8,9) according to any of claims 1 to 10, wherein the radial shock absorber (8,9) contains a rotary movement limitation device (25).

12. Household appliance (1) comprising the radial shock absorber (8,9) as defined in any of claims 1 to 11.

13. Household appliance (1) according to claim 12, wherein the household appliance (1) is a washing machine or a washer-dryer.

14. Process for operating a household appliance (1) comprising the radial shock absorber (8,9) as defined in any of claims 1 to 11, wherein a friction between a first (14), second (15) and/or third rotation axis (16) in the first (10), second (11) and/or third articulation (12), respectively, is adjusted in dependence of a vibration condition of the household appliance (1) by means of a change of shape in a shape-memory material (26).

15. Process according to claim 14, wherein the household appliance (1) is a washing-machine or a wash-dryer with a tub (3) and a laundry drum (4) which is rotatable around a horizontal axis (5) and arranged within the tub (3), and wherein at least one radial shock absorber (8,9) is placed between the tub (3) and a housing (2) of the washing-machine or a wash-dryer.
